# DEMANDE DE BREVET EUROPEEN

(11) **EP 0 629 027 A1**
(43) Date de publication de la demande: **14.12.1994**
(21) Numéro de dépôt: 94401272.3
(22) Date de dépôt: 08.06.1994
(51) Int. Cl.: H01R 35/02, B60R 16/02

(54) **Contacteur électrique tournant**

(30) Priorité: 10.06.1993 FR 9306979
(71) Demandeur: JAEGER, F-92000 Nanterre (FR)
(72) Inventeur: Hallet, Michel, F-14320 Clinchamps-sur-Orne (FR)
(74) Mandataire: Martin, Jean-Jacques

(57) **Abrégé**

La présente invention concerne un contacteur électrique tournant du type comprenant : un premier élément de boîtier fixe (120), un second élément de boîtier (130) concentrique au premier élément de boîtier fixe (120) et mobile à rotation par rapport à celui-ci, et un organe conducteur électrique (140) souple enroulé en spiral entre l'élément fixe (120) et l'élément mobile (130) de boîtier, caractérisé par le fait que : il comporte un index repère (150) placé sur l'organe conducteur (140) en un point intermédiaire des extrémités (142, 144) de celui-ci, fixé respectivement sur l'élément fixe (120) et mobile (130), et l'un des éléments (120, 130) comporte une fenêtre localisée en regard de l'index (150) dans une position relative connue entre les éléments (120, 130).

## Description

La présente invention concerne le domaine des contacteurs électriques tournants.

Plus précisément, la présente invention concerne les contacteurs du type comprenant :
- un premier élément de boîtier fixe,
- un second élément de boîtier concentrique au premier élément de boîtier fixe et mobile à rotation par rapport à celui-ci, et
- un organe conducteur électrique souple enroulé en spiral entre l'élément fixe et l'élément mobile du boîtier.

La présente invention trouve notamment, mais non exclusivement, application à la transmission de signaux électriques entre des moyens liés au volant d'un véhicule automobile, par exemple un système type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476 et US-A-3525536.

Ces contacteurs électriques tournants posent un problème majeur : le repérage du point milieu de la course angulaire relative entre l'élément de boîtier fixe et l'élément de boîtier mobile, nécessaire en particulier pour opérer un montage optimal correct du système, est difficile à opérer.

De nombreuses solutions ont déjà été proposées pour opérer ce repérage du point milieu de la course angulaire relative.

Le document US-A-4875860 propose par exemple un système de repérage comprenant une couronne dentée liée à l'un des éléments de boîtier et un pignon denté en prise avec la couronne et sollicité par l'autre élément du boîtier, le nombre de dents du pignon étant inférieur au nombre de dents de la couronne de sorte que lors d'une rotation relative entre les deux éléments de boîtier, le pignon se déplace par rapport à la couronne.

Le document US-A-4867688 propose un système de repérage comprenant une couronne dentée liée à l'élément externe du contacteur, une bague pourvue de lumières latérales équi-réparties autour de l'axe, intercalée entre l'élément externe et l'élément interne, et un pignon monté à rotation sur l'élément interne autour d'un axe parallèle à son axe, en prise avec la couronne externe et traversant lesdites lumières de la bague.

Le document US-A-4789342 décrit un système de repérage comprenant un pignon placé sur l'extérieur du contacteur et en prise avec une bague ajourée liée à l'un des éléments du boîtier de contacteur.

Les différents systèmes de repérage pour contacteurs électriques tournants jusqu'ici proposés sont de structure complexe.

La présente invention a pour but principal de perfectionner les systèmes existants.

Ce but est atteint dans le cadre de la présente invention grâce à un contacteur électrique tournant du type indiqué précédemment comprenant :
- un premier élément de boîtier fixe,
- un second élément de boîtier concentrique au premier élément de boîtier fixe et mobile à rotation par rapport à celui-ci, et
- un organe conducteur électrique souple enroulé en spiral entre l'élément fixe et l'élément mobile de boîtier,
   caractérisé par le fait que :
- il comporte un index repère placé sur l'organe conducteur en un point intermédiaire des extrémités de celui-ci, fixées respectivement sur l'élément fixe et l'élément mobile, et
- l'un des éléments comporte une fenêtre localisée en regard de l'index dans une position relative connue entre les éléments.

Selon une autre caractéristique avantageuse de la présente invention, la position relative connue entre les éléments correspond au point milieu de la course relative entre ceux-ci.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique en perspective partiellement éclatée d'un contacteur électrique tournant conforme à la présente invention,
- la figure 2 représente une vue schématique en perspective similaire du contacteur électrique tournant conforme à la présente invention,

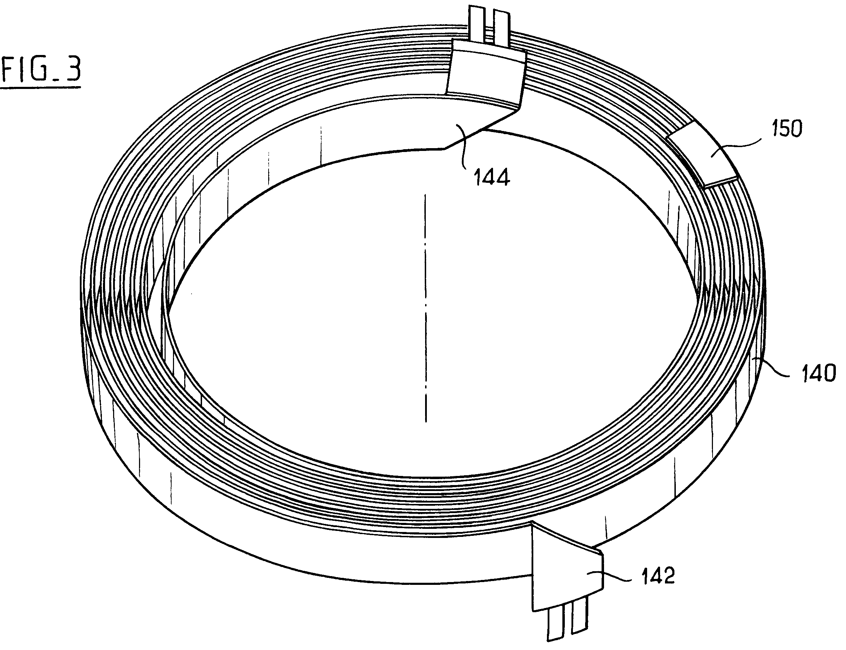

- la figure 3 représente une vue schématique en perspective de l'organe conducteur électrique équipé d'un index repère conforme à la présente invention,
- les figures 4 et 5 représentent schématiquement un contacteur électrique tournant conforme à la présente invention dans deux positions relatives des éléments de boîtier fixe et mobile, et
- la figure 6 représente une vue schématique en perspective d'un index repère conforme à la présente invention.

Le contacteur électrique tournant 100 conforme à la présente invention représenté sur les figures annexées comprend un boîtier 110 formé de deux éléments 120, 130 susceptibles de déplacement relatifs à rotation, un organe conducteur électrique souple 140 et un index repère 150.

Les éléments de boîtier 120, 130 peuvent faire l'objet de nombreuses variantes de réalisation. Ils sont adaptés pour définir entre eux une chambre annulaire 112 qui loge l'organe conducteur 140. Selon le mode de réalisation particulier représenté sur les figures annexées, l'élément externe 120 est fixe. A cet effet, l'élément externe 120 est pourvu de pattes de fixation 122. L'élément externe 120 du boîtier peut ainsi être fixé sur une colonne de direction de véhicule automobile.

L'élément interne 130 est donc susceptible de rotation relative par rapport à l'élément externe 120 autour de son axe 132. Bien entendu, la disposition inverse pourrait être retenue, à savoir : un élément interne 130 fixe et un élément externe 120 mobile.

Plus précisément, selon le mode de réalisation représenté sur les figures annexées, l'élément externe 120 comprend un flasque 123 en forme de couronne perpendiculaire à l'axe 132 et une paroi circulaire externe 124 centrée sur l'axe 132.

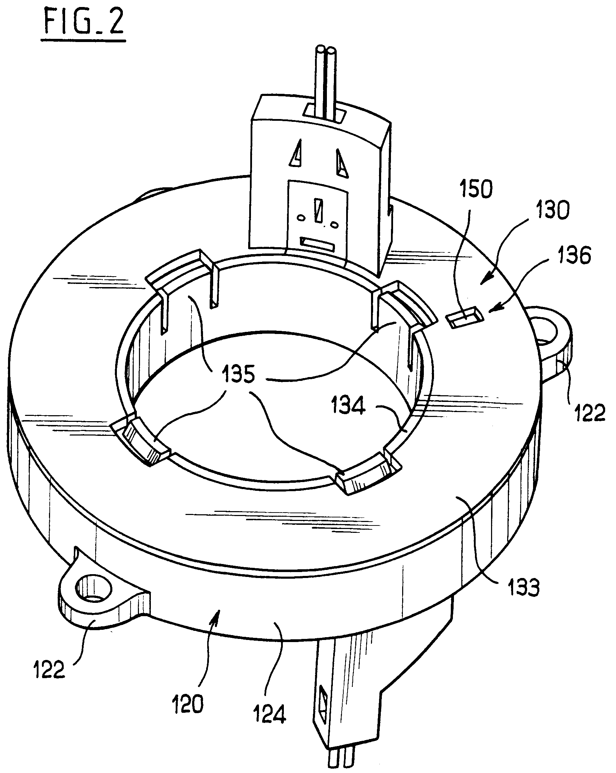

L'élément interne 130 est quant à lui formé d'un moyeu central 134 cylindrique de révolution autour de l'axe 132 et d'un couvercle 133 visible sur la figure 2 en forme de couronne transversale à l'axe 132 adaptée pour être fixée par tout moyen approprié sur le moyeu 134, par exemple par clipsage grâce à des languettes 135 venues de moulage sur le moyeu 134.

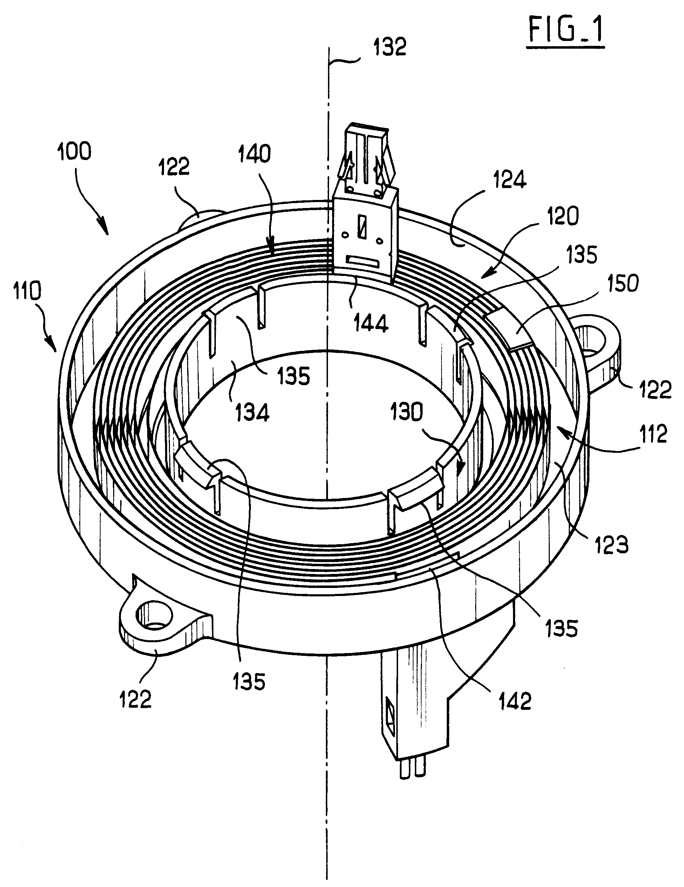

L'organe conducteur électrique 140 est enroulé en spiral entre les deux éléments 120, 130 comme on le voit sur la figure 1. L'organe conducteur 140 est de préférence formé d'un élément multi-pistes. L'organe conducteur 140 peut être formé de tout moyen approprié connu de l'homme de l'art, par exemple un circuit-imprimé souple.

L'organe conducteur 140 est fixé respectivement par ses extrémités 142, 144 sur les deux éléments de boîtier 120, 130.

Comme indiqué précédemment, dans le cadre de la présente invention, un index repère 150 est placé sur l'organe conducteur 140 en un point de celui-ci intermédiaire entre ses extrémités 142, 144.

En outre, l'un des éléments 120, 130 du boîtier 110 comporte une fenêtre 136 localisée en regard de l'index 150 dans une position relative connue entre les éléments 120, 130, de préférence en position médiane de leur course relative.

Selon le mode de réalisation particulier représenté sur les figures annexées, comme on le voit notamment sur la figure 2, la fenêtre 136 est ménagée dans l'élément mobile 130, plus précisément dans le couvercle 133.

L'index repère 150 peut faire l'objet de nombreux modes de réalisation.

De préférence, l'index repère 150 comprend une pince 152 adaptée pour être fixée sur l'organe conducteur 150 et faire saillie sur la tranche de celui-ci, en regard de la fenêtre 136.

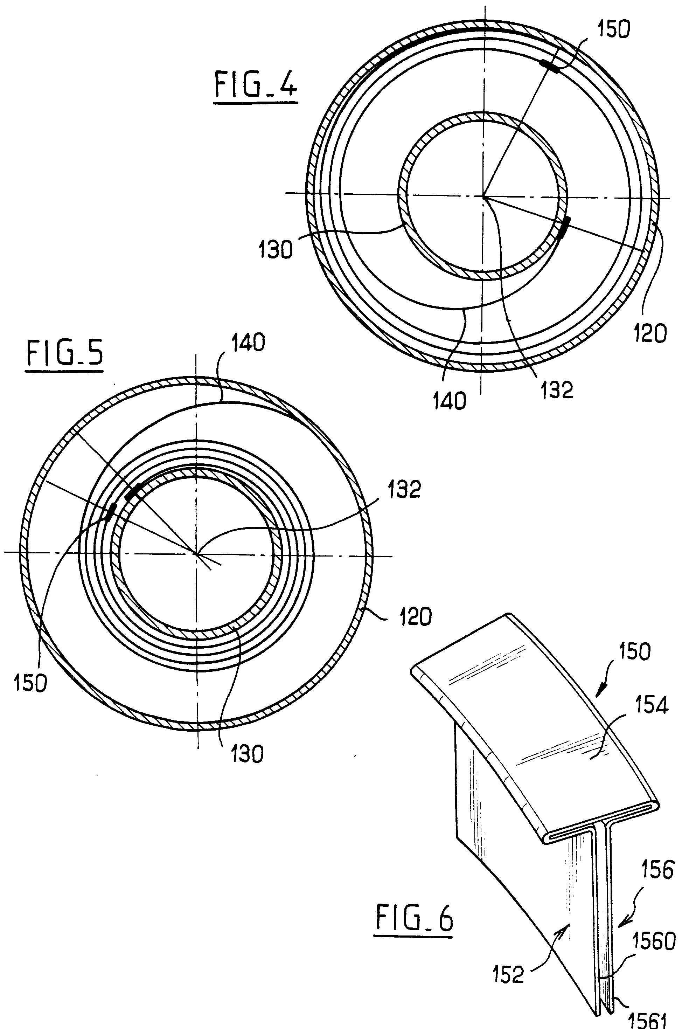

Plus précisément encore, selon le mode de réalisation particulier représenté sur la figure 6, l'index repère 150 a la forme générale d'un profilé de section droite en T possédant une tête 154 et un pied 156. La tête 154 et le pied 156 sont orthogonaux entre eux. Le pied 156 se raccorde à la tête 154 à mi-largeur de celle-ci. Plus précisément encore, le pied 156 est formé de deux ailes 1560, 1561 parallèles formant la pince 152 précitée apte à être engagée sur l'organe conducteur 140. La tête 154 forme quant à elle une plaquette disposée sur la tranche du conducteur 140 et visible par la fenêtre 136 lorsque les deux éléments 120, 130 sont placés dans ladite position relative connue.

Le fonctionnement du dispositif est essentiellement le suivant.

Quand on tourne l'élément mobile 130 du boîtier dans un sens par rapport à l'élément fixe 120, l'organe conducteur 140 s'enroule sur le diamètre interne de l'élément externe 120 comme on le voit sur la figure 4. Inversement, lorsque l'élément mobile 130 est entraîné à rotation dans le sens opposé, l'organe conducteur 140 s'enroule sur le diamètre externe de l'élément interne 130. Les diamètres d'enroulement étant différents, on comprend que toutes rotations relatives entre les éléments 120, 130 du boîtier entraînent un décalage angulaire de l'index repère 150 par rapport à l'un et l'autre des deux éléments de boîtier 120, 130.

Par conséquent, l'index repère 150 n'est placé en regard de la fenêtre 136 que dans la position relative connue des deux éléments de boîtier 120, 130 correspondant de préférence à la position médiane de leur course relative.

Bien entendu la présente invention n'est pas limitée au mode de réalisation particulier qui vient d'être décrit mais s'étend à toute variante conforme à son esprit.

En particulier, l'index repère 150 n'est aucunement limité au mode de réalisation particulier représenté sur les figures annexées et décrites précédemment.

## Revendications

1. Contacteur électrique tournant du type comprenant :
- un premier élément de boîtier fixe (120),
- un second élément de boîtier (130) concentrique au premier élément de boîtier fixe (120) et mobile à rotation par rapport à celui-ci, et
- un organe conducteur électrique (140) souple enroulé en spiral entre l'élément fixe (120) et l'élément mobile (130) de boîtier,
caractérisé par le fait que :
- il comporte un index repère (150) placé sur l'organe conducteur (140) en un point intermédiaire des extrémités (142, 144) de celui-ci, fixé respectivement sur l'élément fixe (120) et mobile (130), et
- l'un des éléments (120, 130) comporte une fenêtre (136) localisée en regard de l'index (150) dans une position relative connue entre les éléments (120, 130).

2. Contacteur selon la revendication 1, caractérisé par le fait que la position relative connue entre les éléments (120, 130) correspond au point milieu de leur course relative.

3. Contacteur selon l'une des revendications 1 ou 2, caractérisé par le fait que l'index repère (150) comporte une pince (152) adaptée pour être fixée sur l'organe conducteur (140).

4. Contacteur selon la revendication 3, caractérisé par le fait que l'index repère possède une section droite en T dont la tête forme une plaquette (154) visible au niveau de la fenêtre (136) en position relative connue des éléments de boîtier (120, 130) et le pied (156) possède deux branches parallèles (1560, 1561) formant pince (152) aptes à être engagées sur l'organe conducteur (140).

5. Contacteur selon l'une des revendications 1 à 4, caractérisé par le fait que la fenêtre (136) est ménagée dans l'élément mobile (130) du boîtier.

6. Contacteur selon l'une des revendications 1 à 5, caractérisé par le fait que la fenêtre (136) est ménagée dans un flasque (133) orthogonal à l'axe de rotation relative (132).
